# EUROPEAN PATENT SPECIFICATION

(11) **EP 4 363 713 B1**
(45) Date of publication and mention of the grant of the patent: **12.03.2025**
(21) Application number: 22737738.9
(22) Date of filing: 24.06.2022
(51) Int. Cl.: F03D 13/10, F03D 13/20

(54) **TRANSITION PIECE FOR A HYBRID WIND TURBINE TOWER AND METHOD FOR ASSEMBLING SAME**
ÜBERGANGSSTÜCK FÜR EINEN HYBRIDWINDTURBINENTURM UND VERFAHREN ZUR MONTAGE DAVON
PIÈCE DE TRANSITION POUR TOUR ÉOLIENNE HYBRIDE ET PROCÉDÉ D'ASSEMBLAGE DE CETTE DERNIÈRE

(30) Priority: 30.06.2021 DK PA202170335
(43) Date of publication of application: 08.05.2024
(73) Proprietor: VESTAS WIND SYSTEMS A/S, 8200 Aarhus N (DK)
(72) Inventor: MADSEN, Rasmus Bøgelund, 8200 Aarhus N (DK); JENSEN, Michael V. B., 8200 Aarhus N (DK); RASMUSSEN, Steffen Emil, 8200 Aarhus N (DK)
(74) Representative: Vestas Patents Department
(86) International application number: PCT/DK2022/050141
(87) International publication number: WO 2023/274477

(56) References cited:
- EP-A1- 2 388 479
- EP-B1- 2 574 772
- EP-B1- 2 807 317
- DE-A1- 102016 203 494

## Description

### Technical Field

This invention relates generally to wind turbines, and more particularly to a hybrid wind turbine tower having a transition piece for connecting tower sections having different cross-sectional profiles, and to a method for assembling a wind turbine having such a transition piece.

### Background

Wind turbines are used to produce electrical energy using a renewable resource and without combusting a fossil fuel. Generally, a wind turbine converts kinetic energy from the wind into electrical power. A horizontal-axis wind turbine includes a tower, a nacelle located at the apex of the tower, and a rotor having a plurality of blades and supported in the nacelle by means of a shaft. The shaft couples the rotor either directly or indirectly with a generator, which is housed inside the nacelle. Consequently, as wind forces the blades to rotate, electrical energy is produced by the generator. Wind turbines may be located either on a land mass (on-shore) or within a body of water (off-shore).

The tower of a wind turbine is typically assembled from multiple tower sections positioned one on top of the other to form the tower. In one arrangement, a tower may include a lower tower section, one or more middle tower sections, and an upper tower section. During assembly, the lower tower section may be secured to a foundation of some sort (e.g., an anchor cage for on-shore wind turbines or a pile or platform for off-shore wind turbines), the one or more middle tower sections may be lifted onto the top of the lower tower section, then the upper tower section may be lifted onto the top of the uppermost middle tower section. Finally, the nacelle may be lifted onto the top of the upper tower section. A lifting device, such as a crane, may be used to lift the tower sections and nacelle into place.

The different tower sections are often made off-site and then transported to the installation site for the wind turbine where the tower sections are assembled (stacked) to form the tower. Each of these tower sections is generally tubular with a circular cross section and mounting interfaces, such as flanges, at opposing ends of the section. The mounting interfaces are configured to be connected (typically with bolts) to an adjacent tower section to assemble the tower. During operation of the wind turbine, the bending loads in the tower are largest at the bottom of the tower and decrease along the height of the tower with the bending loads being the smallest towards the top of the tower. To accommodate this bending load distribution, the tower may be conically shaped with the lowest tower section having the largest diameter and the highest tower section having the smallest diameter.

As the size of the wind turbines increase, the size of the lower tower sections has to increase to accommodate increased bending loads. There becomes a point where a tubular tower section made off-site is too large in diameter to be transported to the installation site. For example, the network of roads for on-shore wind turbines have limitations including the free height under bridges and tunnels, the turning radii of curves and bends, the weight limitations of certain roads, etc. that make the transport of large wind turbine tower sections impractical. Accordingly, to overcome such limitations, some manufacturers have turned to segmented wind turbine tower sections, wherein a tower section is formed by a plurality of tower segments which are coupled edge-to-edge to form the tower section. This allows large tower sections to be transported to the wind turbine installation site as separate segments, such as 4, 6, 8 or 10 segments, and then assembled at the installation site to form the tower sections.

Current segmented wind turbine towers typically have segmented tower sections along the full height of the tower, from the lowermost tower section to the uppermost tower section. While segmented wind turbine towers improve the transportability of the tower to the installation site, such segmented towers have a number of drawbacks as well. For example, the assembly of segmented tower sections is labour and time intensive compared to non-segmented tubular tower sections manufactured off-site. In this regard, the large number of bolted connections between adjacent tower segments (e.g., along vertical flanges or splice plates) and between adjacent tower sections (e.g., along horizontal flanges or splice plates) are generally performed manually with personnel both inside and outside the tower during assembly. Thus, a considerable amount of manual labour, and time, is required to construct the segmented wind turbine tower.

An example of a prior art wind turbine tower is known from EP 2 807 317 B1.

Accordingly, manufacturers continually seek improvements to the assembly of segmented wind turbine towers at a wind turbine installation site. More particularly, there is a need for a wind turbine tower that uses segmented tower sections adjacent a lower end of the tower, where the size of the tower sections may be large and difficult to transport; uses traditional tower sections adjacent an upper end of the tower, where the size of the tower sections are smaller and easier to transport; and provides for a transition between different types of tower sections at a location between the upper and lower ends of the tower.

### Summary

To these and other ends, a hybrid wind turbine tower having a lower end mounted to a foundation and an upper end for connection to a nacelle of a wind turbine is disclosed. The hybrid tower includes at least one polygonal tower section connected to the foundation, wherein the at least one polygonal tower section includes a polygonal cross-sectional profile; at least one tubular tower section for connection to the nacelle, wherein the at least one tubular tower section includes a circular cross-sectional profile; and a transition piece disposed between the at least one polygonal tower section and the at least one tubular tower section, wherein the transition piece includes an upper portion having a circular cross-sectional profile connected to a lower end of the at least one tubular tower section, and a lower portion having a polygonal cross-sectional profile connected to an upper end of the at least one polygonal tower section. In an exemplary embodiment, the hybrid wind turbine tower may include a plurality of polygonal tower sections and a plurality of tubular tower section, and the transition piece may be disposed between the uppermost polygonal tower section and the lowermost tubular tower section.

In an exemplary embodiment, the transition piece may be integrated into the lower end of the at least one tubular tower section such that the transition piece and the at least one tubular tower section form a unitary structure, wherein the transition piece is intended to be permanently mounted to the lower end of the at least one tubular tower section (e.g., such as by welding and not by removable fasteners). In one embodiment, the transition piece may include a mounting interface at an upper end of the upper portion of the transition piece that is connected to a mounting interface at the lower end of the at least one tubular tower section. For example, in one embodiment, the mounting interface of the transition piece may be connected to the mounting interface of the at least one tubular tower section by a weld. In another embodiment, the mounting interfaces may include mounting flanges that are connected together by bolts or other removable fasteners. At the other end of the transition piece, a plurality of splice plates connects the lower portion of the transition piece to the upper end of the at least one polygonal tower section. In one embodiment, the at least one polygonal tower section is formed by a plurality of tower segments coupled edge-to-edge, and each tower segment includes one or more bends that collectively form the polygonal cross-sectional profile of the at least one polygonal tower section.

In one embodiment, the transition piece may have a one-piece construction. For example, the transition piece may be formed from a strip of stock material that is rolled and connected to itself at opposed ends of the strip (e.g., such as by welding) to form a ring. The one-piece ring may then be machined as needed to form the upper circular portion and lower polygonal portion of the transition piece. In another embodiment, the transition piece may be cast to form the upper and lower portions of the transition piece with the desired cross-sectional profile. The casting provides a transition piece having a continuous, monolithic construction. In yet another embodiment, the transition piece may have a two-piece construction. In this embodiment, a strip of stock material may be rolled, bent, and connected to itself at opposed ends of the strip to form the lower polygonal portion of the transition piece. In a similar manner, another strip of stock material may be rolled and connected to itself at opposed ends of the strip to form the upper circular portion of the transition piece and be machined if necessary to achieve a desired cross sectional profile. The separate pieces may then be connected together, such as through welding, at a connection joint to form the transition piece.

In one embodiment, the upper portion of the transition piece may include a first wall thickness, the lower portion of the transition piece may include a second wall thickness, and the second wall thickness may be less than the first wall thickness.

Additionally, the upper portion of the transition piece may include a first height, the lower portion may include a second height, and the second height may be greater than the first height. In one embodiment, the transition piece has a height and a diameter, and the height-to-diameter ratio may be less than or equal to about 0.5. In an exemplary embodiment, at a connecting joint between upper and lower portions of the transition piece, the upper portion defines an inner radius and an outer radius (due to circular cross-sectional profile) and the lower portion defines an inner periphery and an outer periphery (due to polygonal cross-sectional profile), and the inner and outer periphery of the lower portion of the transition piece may be bounded by or remain within the confines of the inner and outer radius of the upper portion of the transition piece.

In another embodiment, a wind turbine includes the hybrid wind turbine tower described above, a nacelle mounted to the upper end of the tower; and a rotor having one or more wind turbine blades rotatably coupled to the nacelle.

In accordance with another aspect of the invention, a method of assembling a hybrid tower for a wind turbine is disclosed. The method includes connecting a lower end of at least one polygonal tower section to a foundation of a wind turbine, wherein the at least one polygonal tower section includes a polygonal cross-sectional profile; connecting a lower end of at least one tubular tower section to an upper end of the at least one polygonal tower section, wherein the at least one tubular tower section includes a circular cross-sectional profile; and disposing a transition piece between the at least one polygonal tower section and the at least one tubular tower section, wherein the transition piece includes an upper portion having a circular cross-sectional profile configured to connect to a lower end of the at least one tubular tower section, and a lower portion having a polygonal cross-sectional profile configured to connect to an upper end of the at least one polygonal tower section.

In one embodiment, disposing the transition piece between the at least one polygonal tower section and the at least one tubular tower section may include integrating the transition piece into the lower end of the at least one tubular tower section such that the transition piece and the at least one tubular tower section form a unitary structure. In an exemplary embodiment, the integrating occurs prior to connecting the at least one tubular tower section to the at least one polygonal tower section. In one embodiment, the assembly method may include hoisting the at least one tubular tower section, such as with a crane or other lifting apparatus, prior to connecting the at least one tubular tower section to the at least one polygonal tower section, and the transition piece is integrated into the lower end of the at least one tubular tower section prior to hoisting the at least one tubular tower section. In another embodiment, the assembly method may include transporting the at least one tubular tower section from a manufacturing facility to a wind turbine installation site, and the transition piece may be integrated into the lower end of the at least one tubular tower section prior to transporting the at least one tubular tower section.

In another embodiment, disposing the transition piece between the at least one polygonal tower section and the at least one tubular tower section includes connecting the transition piece to the lower end of the at least one tubular tower section prior to connecting the at least one tubular tower section to the at least one polygonal tower section. For example, the upper end of the transition piece may include a mounting flange and the lower end of the at least one tubular tower section may also include a mounting flange, and the mounting flanges may be connected together with bolts or other removable fasteners prior to connecting the at least one tubular tower section to the at least one polygonal tower section. In one embodiment, the assembly method may include hoisting the at least one tubular tower section prior to connecting the at least one tubular tower section to the at least one polygonal tower section, and the transition piece may be connected to the lower end of the at least one tubular tower section prior to hoisting the at least one tubular tower section.

In a further embodiment, disposing the transition piece between the at least one polygonal tower section and the at least one tubular tower section includes connecting the transition piece to the upper end of the at least one polygonal tower section prior to connecting the at least one polygonal tower section to the foundation. The connection between the transition piece and the at least one polygonal tower section is via a plurality of splice plates, for example. In one embodiment, the assembly method may include hoisting the at least one polygonal tower section prior to connecting the at least one polygonal tower section to the foundation, and the transition piece may be connected to the upper end of the at least one polygonal tower section prior to hoisting the at least one tubular tower section. The at least one tubular tower section may then be coupled to the at least one polygonal tower section, such as via mounting flanges and removable fasteners.

In one embodiment, the at least one polygonal tower section may be formed by a plurality of tower segments having one or more bends formed therein, and wherein the method further includes connecting the plurality of tower segments edge-to-edge to form the at least one polygonal tower section.

### Brief Description of the Drawings

The accompanying drawings, which are incorporated in and constitute a part of this specification, illustrate embodiments of the invention and, together with a general description of the invention given above, and the detailed description given below, serve to explain the invention.
Fig. 1 is a perspective view of a wind turbine in accordance with an embodiment of the invention;
Fig. 2 is an enlarged elevational view of the tower of the wind turbine of Fig. 1;
Fig. 3 is a perspective view of a transition piece according to one embodiment of the invention;
Fig. 3A is partial cross-sectional view of the transition piece of Fig. 3 taken along lines 3A.
Fig. 4 is a cross-sectional view of a transition piece according to another embodiment of the invention;
Fig. 5 is a partial plan view of the connection joint between the upper portion and the lower portion of the transition piece of Fig. 4;
Fig. 6 is a cross-sectional view of the transition piece of Fig. 4 connected to a tubular tower section and a polygonal tower section;
Fig. 7 is a cross-sectional view of a transition piece with an upper mounting flange connected to a tubular tower section being lowered onto a polygonal tower section; and
Fig. 8 is a cross-sectional view of a transition piece with an upper mounting flange connected to polygonal tower section and a tubular tower section being lowered onto the transition piece.

### Detailed Description

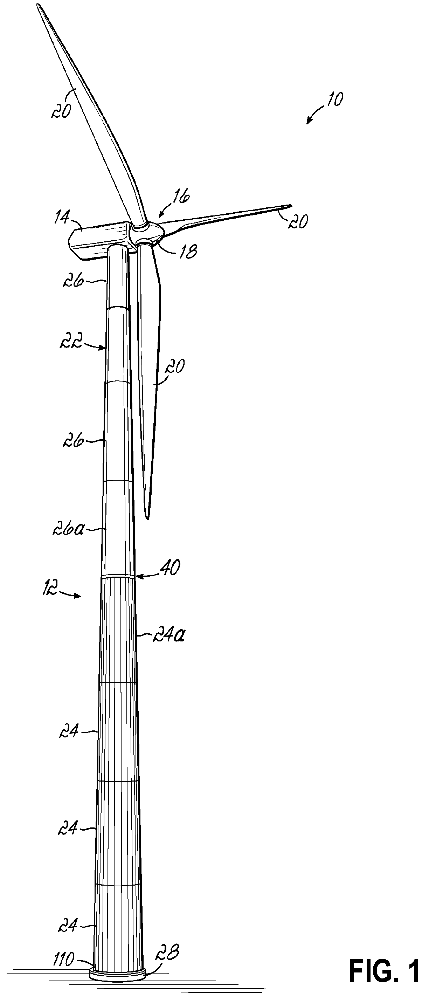

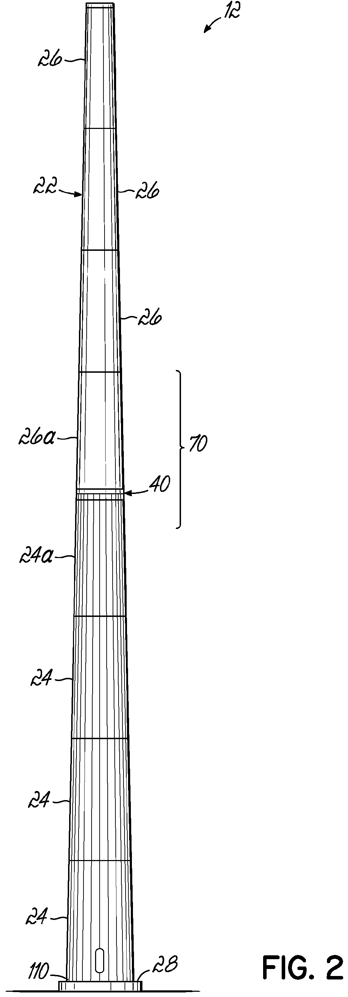

With reference to Figs. 1 and 2, a wind turbine 10 includes a tower 12, a nacelle 14 disposed at the upper end of the tower 12, and a rotor 16 operatively coupled to a generator (not shown) housed inside the nacelle, and a gearbox (not shown) also housed inside the nacelle 14. In addition to the generator and gearbox, the nacelle 14 may house various components needed to convert wind energy into electrical energy and to operate and optimize the performance of the wind turbine 10. The tower 12 supports the load presented by the nacelle 14, rotor 16, and other wind turbine components housed inside the nacelle 14 and operates to elevate the nacelle 14 and rotor 16 to a height above ground level or sea level, as may be the case, at which air currents having lower turbulence and higher velocity are typically found.

The rotor 16 includes a hub 18 and one or more (e.g., three) blades 20 attached to the hub 18 at locations distributed about the circumference thereof. The blades 20 project radially outward from the hub 18 and are configured to interact with passing air currents to produce rotational forces that cause the hub 18 to spin about its longitudinal axis. This rotational energy is delivered to the generator housed within the nacelle 14 and converted into electrical power.

The tower 12 in Figs. 1 and 2 is constructed of a plurality of tower sections 22, where the bottom part of the tower 12 is constructed of at least one and preferably a plurality of polygonal tower sections 24 connected end-to-end, and the upper part of the tower 12 is constructed of at least one and preferably a plurality of tubular tower sections 26 connected end-to-end. The polygonal tower sections 24 have a polygonal cross-sectional profile and the tubular tower sections 26 have a circular cross-sectional profile. The lowermost polygonal tower section 24 is coupled to a foundation 28 secured to land or at sea. A transition piece 40 connects the uppermost polygonal tower section 24a to the lowermost tubular tower section 26a and provides for a transition between the different cross-sectional profiles. The tower 12 formed of both polygonal tower sections 24 and tubular tower sections 26 may be referred to as a hybrid wind turbine tower.

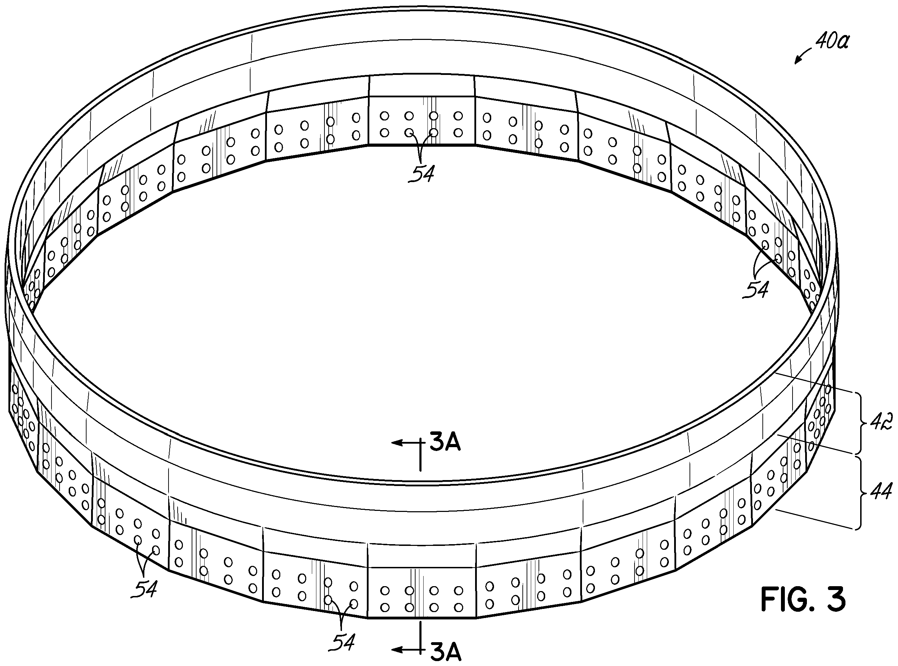

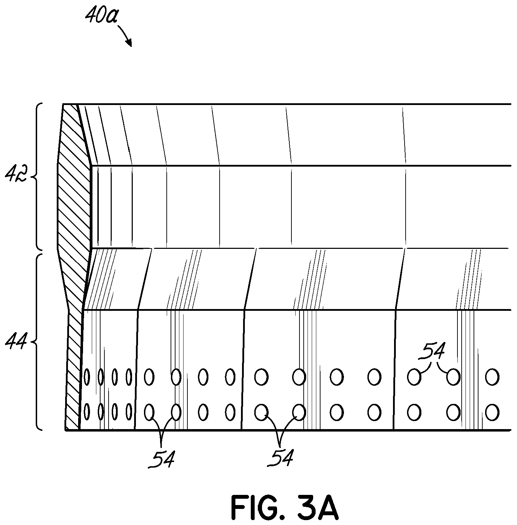

Figs. 3 and 3A illustrate a transition piece, identified as 40a, in accordance with one embodiment of the invention. The transition piece 40a includes an upper portion 42 which has a circular cross-sectional profile at its upper end facing the lowermost tubular tower section 26a and a lower portion 44 which has a polygonal cross-sectional profile at its lower end facing the uppermost polygonal tower section 24a. In this embodiment, the transition piece 40a may have a one-piece construction. More particularly, the transition piece 40a may be constructed by first rolling flat plate stock to form a ring whose opposed ends are joined, such as by welding, to form a continuous structure having the desired diameter. Material may then be machined away to form the desired shape of the upper portion 42 with the generally circular cross-sectional profile, and the lower portion 44 with the generally polygonal cross-sectional profile and the transition between the two profiles. By way of example, an exemplary cross-sectional profile of the upper and lower portions 42, 44 is illustrated in Fig. 3a.

As depicted in Fig. 3A, the upper portion 42 has a wall thickness and the lower section of the lower portion 44 has a wall thickness that is less than the wall thickness of the upper portion 42. The upper section of the lower portion 44 has a tapered section that is machined so that it smoothly transitions or necks from the wall thickness of the upper portion 42 down to the wall thickness of the lower section of the lower portion 44. That tapered section minimizes the stress concentrations in the transition piece 40a as the wall thickness of the upper portion 42 is reduced down to the wall thickness of the lower section of the lower portion 44.

In an alternative embodiment, the transition piece 40a may be also be formed from a casting process such that the transition piece 40a may be considered to have a monolithic construction, i.e., one that does not have a welded seam such as that described above for the transition piece 40a made from flat plate stock. Casting the transition piece 40a allows it to be in its nearly final form right out of the casting so minimal additional reworking is required to achieve the final shape of the transition piece 40a.

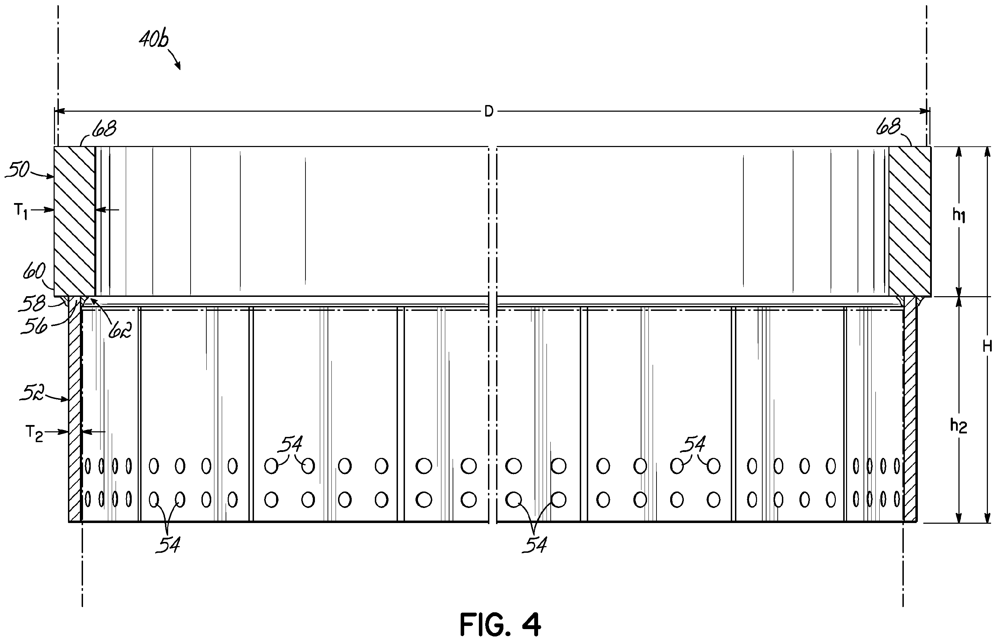

Fig. 4 illustrates another embodiment of the transition piece, identified as 40b, in accordance with another embodiment of the invention. The transition piece 40b includes an upper portion 50 which has a circular cross-sectional profile and a lower portion 52 which has a polygonal cross-sectional profile. In this embodiment, the transition piece 40b may have a two-piece construction. More particularly, the transition piece 40b may be constructed by first bending a flat plate stock in multiple locations to form a polygonal ring. The opposed ends of the polygonal ring may be welded together to form a continuous structure, and then a series of through holes 54 may be drilled in the polygonal ring. The through holes 54 may alternatively be formed in the plate stock prior to bending and welding to form the polygonal ring. In any event, the polygonal ring represents the lower portion 52 of the transition piece 40b. Separately, a circular ring may be formed from flat plate stock with its opposed ends welded together to form another continuous structure. This circular ring represents the upper portion 50 of the transition piece 40b. An upper end 56 of the polygonal ring (lower portion 52) is then joined via weld 58 to a lower end 60 of the circular ring (upper portion 50) to form the transition piece 40b. A connection joint 62 is formed between the upper end 56 of the lower portion 52 and the lower end 60 of the upper portion 50. It will be appreciated that other techniques may be used to construct the transition piece 40b and join the upper and lower portions 50, 52 together at the connection joint 62 and aspects of the invention should not be limited to that described above.

The upper portion 50 has a wall thickness T₁, and the lower portion 52 as a wall thickness T₂. Generally, the wall thickness T₂ may be less than the wall thickness T₁. In an exemplary embodiment, the wall thickness T₁ may be in the range of about 45-65 mm and is preferably about 55 mm, and the wall thickness T₂ may be in the range of about 20-40 mm and is preferably about 30 mm. Other thickness values outside of these ranges may also be possible, depending on the particular application. Furthermore, in an exemplary embodiment, the upper portion 50 may have a height h₁ in the range of about 150-250 mm and is preferably about 200 mm, and the lower portion 52 may have a height h₂ in the range of about 250-350 mm and is preferably about 300 mm. The height h₁ plus the heigh h₂ generally defines the total height H of the transition piece 40b. The transition piece 40b also has a diameter D. In an exemplary embodiment, the transition piece 40b may have a height-to-diameter (H/D) ratio that is less or equal to about 0.5. For example, a transitional piece 40b with a diameter D of 4 m may have a height of about 2 m. Other height-to-diameter ratios may also be possible in alternative embodiments.

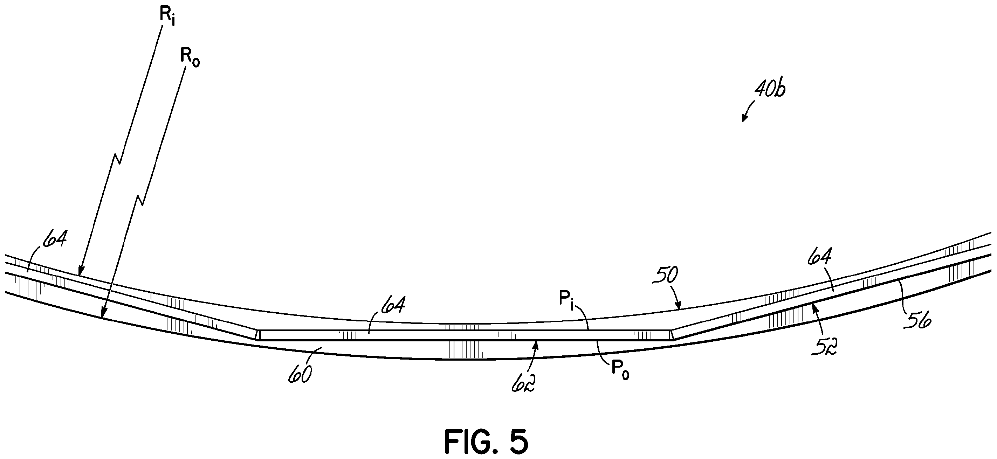

Fig. 5 is a partial view of the transition piece 40b looking upward to where the upper end 56 of the lower portion 52 is welded to the lower end 60 of the upper portion 50. As noted above, the lower portion 52 of the transition piece 40b has a polygonal cross-sectional profile. As such, the lower portion 52 is made up of a plurality of generally planar panels 64 that define an inner periphery Pᵢ and an outer periphery Pₒ. The upper portion 50 with its circular cross-sectional profile defines an inner radius Rᵢ and an outer radius Rₒ. In an exemplary embodiment, at connection joint 62, the inner periphery Pᵢ and the outer periphery Pₒ of the lower portion 52 is within the confines of the inner radius Rᵢ and the outer radius Rₒ of the upper portion 50, as illustrated in Fig. 5.

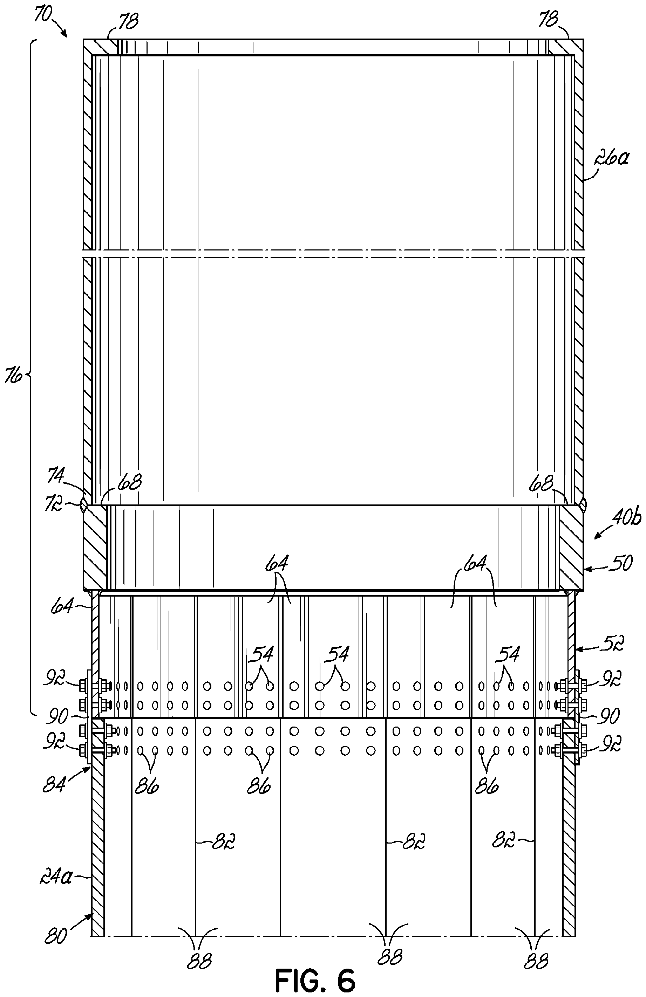

Fig. 6 is a cross-sectional view of a representative portion 70 (Fig. 2) of the tower 12. The portion 70 includes the lowermost tubular tower section 26a in the tower 12, the transition piece 40b, and the uppermost polygonal tower section 24a in the tower 12. During the off-site manufacturing of the tubular tower sections 26, 26a, a mounting interface 68 of the upper portion 50 of the transition piece 40b may be attached, such as by a weld 72, to a lower end 74 of tubular tower section 26a. As such, the transition piece 40b is integrated into the lower end 74 of the tubular tower section 26a such that the transition piece 40b and the tubular tower section 26a form a unitary tower section 76. In this regard, the transition piece 40b is configured to be permanently fixed to the tubular tower section 26a. This is in contrast to non-permanent connections, such as those made by bolts or other removable/releasable fasteners (see below). After the unitary tower section 76 is constructed at the off-site manufacturing facility, it may be transported to the installation site in the same manner as a traditional tubular tower section. The other tubular tower sections 26 may also be manufactured off-site and then transported to the installation site in the traditional manner. The unitary tower section 76 has an upper mounting flange 78 such that it may be joined to the next tubular tower section 26 via fasteners, such as bolts or other removable fasteners, for example.

In an exemplary embodiment, each polygonal tower section 24, 24a may be made from a plurality of polygonal tower segments 80 coupled edge-to-edge using, for example, splice plates. Due to their generally large size, the plurality of polygonal tower segments 80 may be transported to the installation site unassembled and then assembled on site to form the individual polygonal tower sections 24, 24a. As shown in Fig. 6, the lower portion 52 of the transition piece 40b may be connected to an upper end of the polygonal tower segments 80 that form the tower section 24a. In an embodiment, each of the polygonal tower segments 80 may include one or more bends 82 formed therein to define a plurality of generally planar panels 88. The number of panels 88 in the plurality of tower segments 80 that form the polygonal tower section 24a and the number of panels 64 in the lower portion 52 of the transition piece 40b are generally the same. An upper end 84 of the polygonal tower section 24a includes a series of through holes 86. The lower portion 52 of the transition piece 40b is connected to the upper end 84 of the polygonal tower section 24a via splice plates 90 (alternatively called fish plates) and fasteners 92, such as bolts or other suitable fasteners.

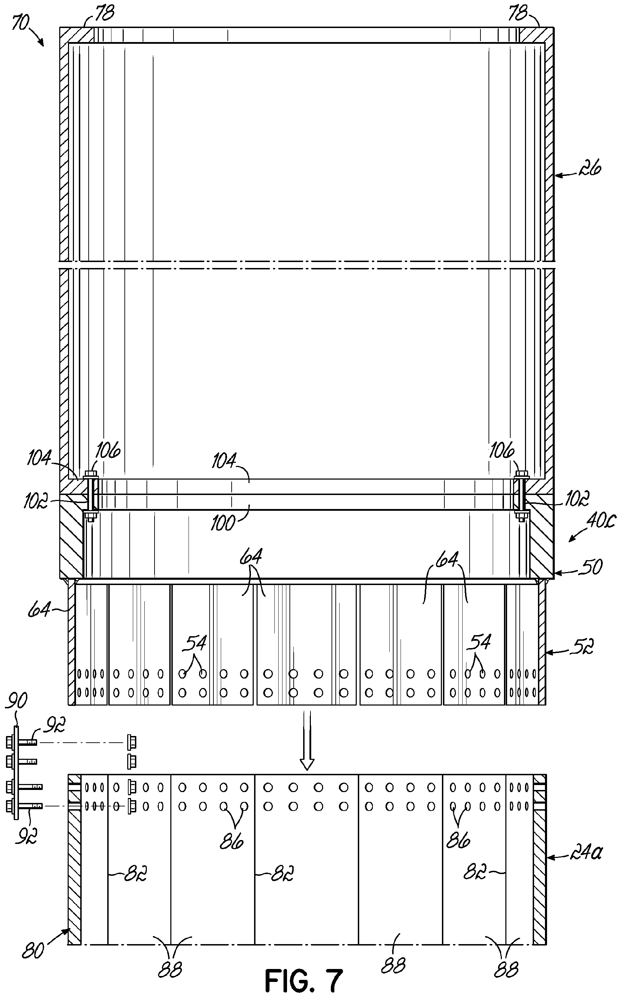

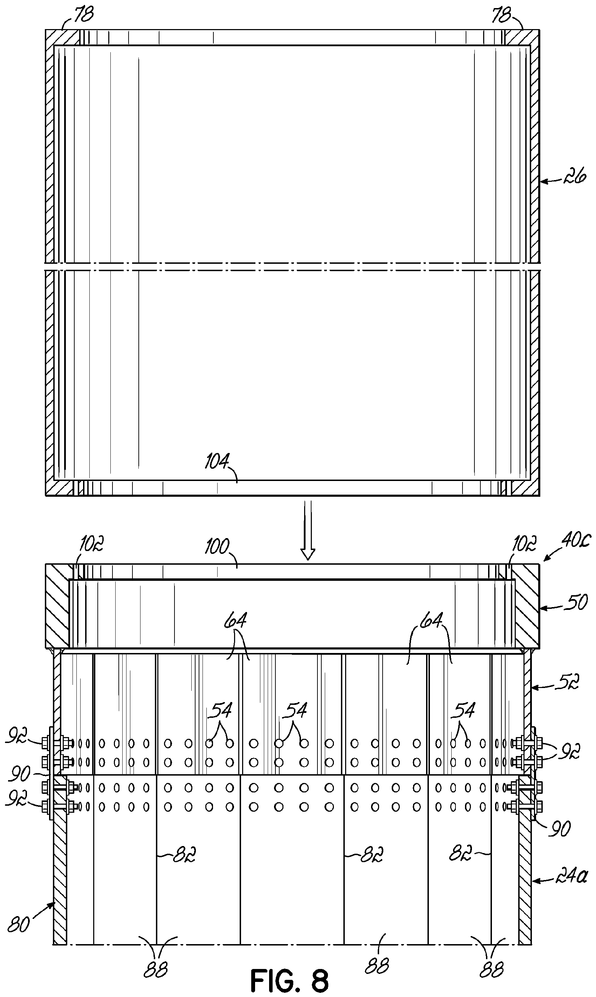

In another embodiment, a transition piece 40c may be similar to transition piece 40b, but the mounting interface 78 may include a mounting flange 100 with a plurality of through holes 102 as depicted in Figs. 7 and 8. The mounting flange 100 is configured to be connected with a corresponding mounting flange 104 on the tubular tower section 26a via fasteners 106, such as bolts. This transition piece 40c may be referred to as a "standalone" transition piece and may be transported to the construction site separately from the tubular tower section 26a.

At the installation site, the transition piece 40c may be connected to the lower end of the tubular tower section 26a via fasteners 106 and then the two connected pieces hoisted up and connected to the uppermost polygonal tower section 24a via splice plates 90 and fasteners 92 as depicted in Fig. 7. Alternatively, the transition piece 40c may be connected to the polygonal tower section 24a and the two connected pieces hoisted up and connected to the foundation 28 or another polygonal tower section 24. Then, the tubular tower section 26a may be hoisted up and connected to the mounting flange 100 of the transition piece 40c as depicted in Fig. 8. Thus, there are multiple ways to dispose the transition piece 40 between the polygonal tower sections 24 and the tubular tower sections 26.

The invention also contemplates a method of assembling the hybrid tower 12 for the wind turbine 10. In one embodiment, a lower end 110 (Fig. 1) of the lowermost polygonal tower section 24 may be connected to the foundation 28. Additional polygonal tower sections 24 may then be hoisted up and connected end-to-end using splice plates, for example. The unitary tower section 76, which is the lowermost tubular tower section 26a and the transition piece 40b integrated together, may be hoisted up and connected to the upper end 84 of polygonal tower section 24a. Additional tubular tower sections 26 may then be hoisted up and connected end-to-end to the unitary tower section 76. As illustrated in Figs. 2 and 6, the transition piece 40b may be disposed between the uppermost polygonal tower section 24a and the lowermost tubular tower section 26a and provides for a transition between tower sections 24 having a polygonal cross-sectional profile and tower sections 26 having a circular cross-sectional profile.

In another embodiment of the method, the standalone transition piece 40c may be transported to the installation site without being connected to any other tower section 24, 26. Once at the installation site, the transition piece 40c may be connected to the lower end of the tubular tower section 26a via fasteners 106 and then those connected components hoisted up and connected to the upper end of the polygonal tower section 24a with splice plates 90 and fasteners 92 as depicted in Fig. 7. Additional tubular tower sections 26 may then be connected end-to-end on top of that tubular tower section 26a. Alternatively, the standalone transition piece 40c may be connected to the upper end 84 of a polygonal tower section 24a at the installation site and then those connected components hoisted up and connected to the foundation 28 or another polygonal tower section 24 with splice plates 90 and fasteners 92. Then, the tubular tower section 26a may be hoisted up and connected to the mounting flange 100 of transition piece 40c as illustrated in Fig. 8. Additional tubular tower sections 26 may then be connected end-to-end on top of the tubular tower section 26a.

Aspects of the invention provide a hybrid tower with the lower, larger tower sections having a segmented design and with a polygonal cross-sectional profile, the upper, smaller tower sections having a traditional (non-segmented) tubular design and with a circular cross-sectional profile, and an intermediate transition piece that provides for a smooth transition between the different cross-sectional profiles. This hybrid tower arrangement provides the efficiencies of traditional tower sections for those sections having a size conducive to transport over the network of roads, while also providing the advantages of segmented tower sections for those sections that are problematic from a transport perspective. Moreover, aspects of the invention also provide assembly methods for a hybrid tower having an intermediate transition piece between the upper and lower ends of the tower that provide certain efficiencies in the assembly process. The assembly method may include integrating the transition piece into the lowermost tubular tower section, such as at the manufacturing facility or at least before the lowermost tubular tower section is hoisted for connection to an assembled polygonal tower section. The assembly method may alternatively include connecting the transition piece to the lower end of the lowermost tubular tower section prior to hoisting the lowermost tubular tower section for connection to an assembled polygonal tower section. The connection may be made using bolts or other removable fasteners and along mating mounting flanges. The assembly method further includes connecting the transition piece to the upper end of the uppermost polygonal tower section prior to hoisting the uppermost polygonal tower section for connection to the foundation or another polygonal tower section. This connection is made using splice plates.

While the present invention has been illustrated by a description of various preferred embodiments and while these embodiments have been described in some detail, it is not the intention of the Applicant to restrict or in any way limit the scope of the appended claims to such detail. Additional advantages and modifications will readily appear to those skilled in the art. Thus, the various features of the invention may be used alone or in any combination depending on the needs and preferences of the user.

## Claims

1. A hybrid wind turbine tower (12) having a lower end mounted to a foundation (28) and an upper end for connection to a nacelle (14) of a wind turbine (10), comprising:
at least one polygonal tower section (24) connected to the foundation (28), wherein the at least one polygonal tower section (24) includes a polygonal cross-sectional profile;
at least one tubular tower section (26) for connection to the nacelle (14), wherein the at least one tubular tower section (26) includes a circular cross-sectional profile; and
a transition piece (40) disposed between the at least one polygonal tower section (24) and the at least one tubular tower section (26), wherein the transition piece (40) includes an upper portion having a circular cross-sectional profile connected to a lower end of the at least one tubular tower section (26), and a lower portion having a polygonal cross-sectional profile connected to an upper end of the at least one polygonal tower section (24), **characterised by**
a plurality of splice plates (90) connecting the lower portion of the transition piece (40) to the upper end of the at least one polygonal tower section (24).

2. The hybrid wind turbine tower (12) of claim 1, wherein the transition piece (40) is integrated into the lower end of the at least one tubular tower section (26) such that the transition piece (40) and the at least one tubular tower section (26) form a unitary structure (76).

3. The hybrid wind turbine tower (12) of claim 1 or 2, wherein the transition piece (40) includes a mounting interface (68) at an upper end of the upper portion of the transition piece (40), and wherein the mounting interface (68) is connected to a mounting interface at the lower end of the at least one tubular tower section (26).

4. The hybrid wind turbine tower (12) of claim 3, where the mounting interface (68) of the transition piece (40) is connected to the mounting interface of the at least one tubular tower section (26) by a weld (72) or a mounting flange (100).

5. The hybrid wind turbine tower (12) of any of the preceding claims, wherein the transition piece (40) has a one-piece construction, a monolithic construction, or a two-piece construction.

6. The hybrid wind turbine tower (12) of any of the preceding claims, wherein the upper portion of the transition piece (40) includes a first wall thickness (T1), wherein the lower portion of the transition piece (40) includes a second wall thickness (T2), and wherein the second wall thickness (T2) is less than the first wall thickness (T1).

7. The hybrid wind turbine tower (12) of any of the preceding claims, wherein at a connection joint (62) between upper and lower portions of the transition piece (40), the upper portion defines an inner radius (Ri) and an outer radius (Ro) and the lower portion defines an inner periphery (Pi) and an outer periphery (Po), and wherein the inner and outer peripheries (Pi, Po) of the lower portion of the transition piece (40) is within the confines of the inner and outer radius (Ri, Ro) of the upper portion of the transition piece (40).

8. The hybrid wind turbine tower (12) of any of the preceding claims, wherein the transition piece (40) has a height (H) and a diameter (D), and wherein the height-to-diameter (H/D) ratio is less than or equal to 0.5.

9. A wind turbine (10), comprising:
the hybrid wind turbine tower (12) according to any of claims 1-8;
a nacelle (14) mounted to the upper end of the tower (12); and
a rotor (16) having one or more wind turbine blades (20) rotatably coupled to the nacelle (14).

10. A method of assembling a hybrid tower (12) for a wind turbine (10), comprising:
connecting a lower end of at least one polygonal tower section (24) to a foundation (28) of the wind turbine (10), wherein the at least one polygonal tower section (24) includes a polygonal cross-sectional profile;
connecting a lower end of at least one tubular tower section (26) to an upper end of the at least one polygonal tower section (24), wherein the at least one tubular tower section (26) includes a circular cross-sectional profile; and
disposing a transition piece (40) between the at least one polygonal tower section (24) and the at least one tubular tower section (26), wherein the transition piece (40) includes an upper portion having a circular cross-sectional profile configured to connect to the lower end (74) of the at least one tubular tower section (26), and a lower portion having a polygonal cross-sectional profile configured to connect to the upper end of the at least one polygonal tower section (24),
wherein the lower portion of the transition piece (40) is connected to the upper end of the at least one polygonal tower section by a plurality of splice plates (90).

11. The method of assembling the hybrid tower (12) of claim 10, wherein disposing the transition piece (40) between the at least one polygonal tower section (24) and the at least one tubular tower section (26) comprises integrating the transition piece (40) into the lower end of the at least one tubular tower section (26) such that the transition piece (40) and the at least one tubular tower section (26) form a unitary structure (76), and wherein the integrating occurs prior to connecting the at least one tubular tower section (26) to the at least one polygonal tower section (24).

12. The method of assembling the hybrid tower (12) of claim 11, further comprising hoisting the at least one tubular tower section (26) prior to connecting the at least one tubular tower section (26) to the at least one polygonal tower section (24), and wherein the transition piece (40) is integrated into the lower end of the at least one tubular tower section (26) prior to hoisting the at least one tubular tower section (26).

13. The method of assembling the hybrid tower (12) of any of claims 10-12 further comprising transporting the at least one tubular tower section (26) from a manufacturing facility to a wind turbine installation site, and wherein the transition piece (40) is integrated into the lower end of the at least one tubular tower section (26) prior to transporting the at least one tubular tower section (26).

14. The method of assembling the hybrid tower (12) of claim 10, wherein disposing the transition piece (40) between the at least one polygonal tower section (24) and the at least one tubular tower section (26) comprises connecting the transition piece (40) to the lower end of the at least one tubular tower section (26) prior to connecting the at least one tubular tower section (26) to the at least one polygonal tower section (24).

15. The method of assembling the hybrid tower (12) of claim 14, further comprising hoisting the at least one tubular tower section (26) prior to connecting the at least one tubular tower section (26) to the at least one polygonal tower section (24), and wherein the transition piece (40) is connected to the lower end of the at least one tubular tower section (26) prior to hoisting the at least one tubular tower section (26).

16. The method of assembling the hybrid tower (12) of any of claims 10-15, wherein the at least one polygonal tower section (24) is formed by a plurality of tower segments (80), wherein each of the plurality of tower segments (80) have one or more bends formed therein, and wherein the method further comprises connecting the plurality of tower segments (80) edge-to-edge to form the at least one polygonal tower section (24).

## Patentansprüche

1. Hybrid-Windkraftanlagenturm (12), der ein unteres Ende, das auf einem Fundament (28) montiert ist, und ein oberes Ende zur Verbindung mit einer Gondel (14) einer Windkraftanlage (10) aufweist, umfassend:
mindestens einen polygonalen Turmabschnitt (24), der mit dem Fundament (28) verbunden ist, wobei der mindestens eine polygonale Turmabschnitt (24) ein polygonales Querschnittsprofil beinhaltet;
mindestens einen rohrförmigen Turmabschnitt (26) zur Verbindung mit der Gondel (14), wobei der mindestens eine rohrförmige Turmabschnitt (26) ein kreisförmiges Querschnittsprofil beinhaltet; und
ein Übergangsstück (40), das zwischen dem mindestens einen polygonalen Turmabschnitt (24) und dem mindestens einen rohrförmigen Turmabschnitt (26) angeordnet ist, wobei das Übergangsstück (40) einen ein kreisförmiges Querschnittsprofil aufweisenden oberen Abschnitt, der mit einem unteren Ende des mindestens einen rohrförmigen Turmabschnitts (26) verbunden ist, und einen ein polygonales Querschnittsprofil aufweisenden unteren Abschnitt beinhaltet, der mit einem oberen Ende des mindestens einen polygonalen Turmabschnitts (24) verbunden ist, **gekennzeichnet durch**
eine Vielzahl von Spleißplatten (90), die den unteren Abschnitt des Übergangsstücks (40) mit dem oberen Ende des mindestens einen polygonalen Turmabschnitts (24) verbinden.

2. Hybrid-Windkraftanlagenturm (12) nach Anspruch 1, wobei das Übergangsstück (40) derart in das untere Ende des mindestens einen rohrförmigen Turmabschnitts (26) integriert ist, dass das Übergangsstück (40) und der mindestens eine rohrförmige Turmabschnitt (26) eine einheitliche Struktur (76) bilden.

3. Hybrid-Windkraftanlagenturm (12) nach Anspruch 1 oder 2, wobei das Übergangsstück (40) eine Montageschnittstelle (68) an einem oberen Ende des oberen Abschnitts des Übergangsstücks (40) beinhaltet, und wobei die Montageschnittstelle (68) mit einer Montageschnittstelle am unteren Ende des mindestens einen rohrförmigen Turmabschnitts (26) verbunden ist.

4. Hybrid-Windkraftanlagenturm (12) nach Anspruch 3, wobei die Montageschnittstelle (68) des Übergangsstücks (40) durch eine Schweißnaht (72) oder einen Montageflansch (100) mit der Montageschnittstelle des mindestens einen rohrförmigen Turmabschnitts (26) verbunden ist.

5. Hybrid-Windkraftanlagenturm (12) nach einem der vorstehenden Ansprüche, wobei das Übergangsstück (40) eine einteilige Konstruktion, eine monolithische Konstruktion oder eine zweiteilige Konstruktion aufweist.

6. Hybrid-Windkraftanlagenturm (12) nach einem der vorstehenden Ansprüche, wobei der obere Abschnitt des Übergangsstücks (40) eine erste Wanddicke (T1) beinhaltet, wobei der untere Abschnitt des Übergangsstücks (40) eine zweite Wanddicke (T2) beinhaltet, und wobei die zweite Wanddicke (T2) kleiner ist als die erste Wanddicke (T1).

7. Hybrid-Windkraftanlagenturm (12) nach einem der vorstehenden Ansprüche, wobei an einer Verbindungsfuge (62) zwischen dem oberen und dem unteren Abschnitt des Übergangsstücks (40) der obere Abschnitt einen Innenradius (Ri) und einen Außenradius (Ro) definiert und der untere Abschnitt einen Innenumfang (Pi) und einen Außenumfang (Po) definiert, und wobei der Innen- und der Außenumfang (Pi, Po) des unteren Abschnitts des Übergangsstücks (40) innerhalb der Grenzen des Innen- und des Außenradius (Ri, Ro) des oberen Abschnitts des Übergangsstücks (40) liegen.

8. Hybrid-Windkraftanlagenturm (12) nach einem der vorstehenden Ansprüche, wobei das Übergangsstück (40) eine Höhe (H) und einen Durchmesser (D) aufweist und wobei das Verhältnis von Höhe zu Durchmesser (H/D) kleiner oder gleich 0,5 ist.

9. Windkraftanlage (10), umfassend:
den Hybrid-Windkraftanlagenturm (12) nach einem der Ansprüche 1-8;
eine Gondel (14), die am oberen Ende des Turms (12) montiert ist; und
einen Rotor (16), der ein oder mehrere Windkraftanlagenblätter (20) aufweist, die drehbar mit der Gondel (14) gekoppelt sind.

10. Verfahren zum Zusammenbauen eines Hybridturms (12) für eine Windkraftanlage (10), umfassend:
Verbinden eines unteren Endes mindestens eines polygonalen Turmabschnitts (24) mit einem Fundament (28) der Windkraftanlage (10), wobei der mindestens eine polygonale Turmabschnitt (24) ein polygonales Querschnittsprofil beinhaltet;
Verbinden eines unteren Endes mindestens eines rohrförmigen Turmabschnitts (26) mit einem oberen Ende des mindestens einen polygonalen Turmabschnitts (24), wobei der mindestens eine rohrförmige Turmabschnitt (26) ein kreisförmiges Querschnittsprofil beinhaltet; und
Anordnen eines Übergangsstücks (40) zwischen dem mindestens einen polygonalen Turmabschnitt (24) und dem mindestens einen rohrförmigen Turmabschnitt (26), wobei das Übergangsstück (40) einen ein kreisförmiges Querschnittsprofil aufweisenden oberen Abschnitt, der so konfiguriert ist, dass er mit dem unteren Ende (74) des mindestens einen rohrförmigen Turmabschnitts (26) verbunden werden kann, und einen ein polygonales Querschnittsprofil aufweisenden unteren Abschnitt beinhaltet, der so konfiguriert ist, dass er mit dem oberen Ende des mindestens einen polygonalen Turmabschnitts (24) verbunden werden kann,
wobei der untere Abschnitt des Übergangsstücks (40) durch eine Vielzahl von Spleißplatten (90) mit dem oberen Ende des mindestens einen polygonalen Turmabschnitts verbunden wird.

11. Verfahren zum Zusammenbauen des Hybridturms (12) nach Anspruch 10, wobei das Anordnen des Übergangsstücks (40) zwischen dem mindestens einen polygonalen Turmabschnitt (24) und dem mindestens einen rohrförmigen Turmabschnitt (26) das Integrieren des Übergangsstücks (40) in das untere Ende des mindestens einen rohrförmigen Turmabschnitts (26) derart umfasst, dass das Übergangsstück (40) und der mindestens eine rohrförmige Turmabschnitt (26) eine einheitliche Struktur (76) bilden, und wobei das Integrieren vor dem Verbinden des mindestens einen rohrförmigen Turmabschnitts (26) mit dem mindestens einen polygonalen Turmabschnitt (24) erfolgt.

12. Verfahren zum Zusammenbauen des Hybridturms (12) nach Anspruch 11, das weiter das Heben des mindestens einen rohrförmigen Turmabschnitts (26) vor dem Verbinden des mindestens einen rohrförmigen Turmabschnitts (26) mit dem mindestens einen polygonalen Turmabschnitt (24) umfasst, und wobei vor dem Heben des mindestens einen rohrförmigen Turmabschnitts (26) das Übergangsstück (40) in das untere Ende des mindestens einen rohrförmigen Turmabschnitts (26) integriert wird.

13. Verfahren zum Zusammenbauen des Hybridturms (12) nach einem der Ansprüche 10-12 , das weiter das Transportieren des mindestens einen rohrförmigen Turmabschnitts (26) von einer Fertigungsanlage zu einem Windkraftanlagen-Installationsort umfasst, und wobei vor dem Transportieren des mindestens einen rohrförmigen Turmabschnitts (26) das Übergangsstück (40) in das untere Ende des mindestens einen rohrförmigen Turmabschnitts (26) integriert wird.

14. Verfahren zum Zusammenbauen des Hybridturms (12) nach Anspruch 10, wobei das Anordnen des Übergangsstücks (40) zwischen dem mindestens einen polygonalen Turmabschnitt (24) und dem mindestens einen rohrförmigen Turmabschnitt (26) das Verbinden des Übergangsstücks (40) mit dem unteren Ende des mindestens einen rohrförmigen Turmabschnitts (26) vor dem Verbinden des mindestens einen rohrförmigen Turmabschnitts (26) mit dem mindestens einen polygonalen Turmabschnitt (24) umfasst.

15. Verfahren zum Zusammenbauen des Hybridturms (12) nach Anspruch 14, das weiter das Heben des mindestens einen rohrförmigen Turmabschnitts (26) vor dem Verbinden des mindestens einen rohrförmigen Turmabschnitts (26) mit dem mindestens einen polygonalen Turmabschnitt (24) umfasst, und wobei vor dem Heben des mindestens einen rohrförmigen Turmabschnitts (26) das Übergangsstück (40) mit dem unteren Ende des mindestens einen rohrförmigen Turmabschnitts (26) verbunden wird.

16. Verfahren zum Zusammenbauen des Hybridturms (12) nach einem der Ansprüche 10-15, wobei der mindestens eine polygonale Turmabschnitt (24) von einer Vielzahl von Turmsegmenten (80) gebildet wird, wobei in jedem der Vielzahl von Turmsegmenten (80) eine oder mehrere Biegungen gebildet sind, und wobei das Verfahren weiter das Verbinden der Vielzahl von Turmsegmenten (80) Kante an Kante umfasst, um den mindestens einen polygonalen Turmabschnitt (24) zu bilden.

## Revendications

1. Tour éolienne hybride (12) présentant une extrémité inférieure montée sur une fondation (28) et une extrémité supérieure destinée à être reliée à une nacelle (14) d'une éolienne (10), comprenant :
au moins une section de tour polygonale (24) reliée à la fondation (28), dans laquelle la au moins une section de tour polygonale (24) inclut un profil en coupe transversale polygonal ;
au moins une section de tour tubulaire (26) destinée à être reliée à la nacelle (14), dans laquelle la au moins une section de tour tubulaire (26) inclut un profil en coupe transversale circulaire ; et
une pièce de transition (40) disposée entre la au moins une section de tour polygonale (24) et la au moins une section de tour tubulaire (26), dans laquelle la pièce de transition (40) inclut une partie supérieure présentant un profil en coupe transversale circulaire relié à une extrémité inférieure de la au moins une section de tour tubulaire (26), et une partie inférieure présentant un profil en coupe transversale polygonal relié à une extrémité supérieure de la au moins une section de tour polygonale (24), **caractérisée par**
une pluralité d'éclisses (90) reliant la partie inférieure de la pièce de transition (40) à l'extrémité supérieure de la au moins une section de tour polygonale (24).

2. Tour éolienne hybride (12) selon la revendication 1, dans laquelle la pièce de transition (40) est intégrée dans l'extrémité inférieure de la au moins une section de tour tubulaire (26) de telle sorte que la pièce de transition (40) et la au moins une section de tour tubulaire (26) forme une structure unitaire (76).

3. Tour éolienne hybride (12) selon la revendication 1 ou 2, dans laquelle la pièce de transition (40) inclut une interface de montage (68) au niveau d'une extrémité supérieure de la partie supérieure de la pièce de transition (40), et dans laquelle l'interface de montage (68) est reliée à une interface de montage au niveau de l'extrémité inférieure de la au moins une section de tour tubulaire (26).

4. Tour éolienne hybride (12) selon la revendication 3, dans laquelle l'interface de montage (68) de la pièce de transition (40) est reliée à l'interface de montage de la au moins une section de tour tubulaire (26) par une soudure (72) ou une bride de montage (100).

5. Tour éolienne hybride (12) selon l'une quelconque des revendications précédentes, dans laquelle la pièce de transition (40) présente une construction monobloc, une construction monolithique ou une construction en deux pièces.

6. Tour éolienne hybride (12) selon l'une quelconque des revendications précédentes, dans laquelle la partie supérieure de la pièce de transition (40) inclut une première épaisseur de paroi (T1), dans laquelle la partie inférieure de la pièce de transition (40) inclut une seconde épaisseur de paroi (T2), et dans laquelle la seconde épaisseur de paroi (T2) est inférieure à la première épaisseur de paroi (T1).

7. Tour éolienne hybride (12) selon l'une quelconque des revendications précédentes, dans laquelle, au niveau d'un raccord de liaison (62) entre les parties supérieure et inférieure de la pièce de transition (40), la partie supérieure définit un rayon intérieur (Ri) et un rayon extérieur (Ro) et la partie inférieure définit une périphérie intérieure (Pi) et une périphérie extérieure (Po), et dans laquelle les périphéries intérieure et extérieure (Pi, Po) de la partie inférieure de la pièce de transition (40) se trouvent dans les limites des rayons intérieur et extérieur (Ri, Ro) de la partie supérieure de la pièce de transition (40).

8. Tour éolienne hybride (12) selon l'une quelconque des revendications précédentes, dans laquelle la pièce de transition (40) présente une hauteur (H) et un diamètre (D), et dans laquelle le rapport hauteur/diamètre (H/D) est inférieur ou égal à 0,5.

9. Éolienne (10), comprenant :
la tour éolienne hybride (12) selon l'une quelconque des revendications 1-8 ;
une nacelle (14) montée sur l'extrémité supérieure de la tour (12) ; et
un rotor (16) présentant une ou plusieurs pales (20) d'éolienne couplées de manière rotative à la nacelle (14).

10. Procédé d'assemblage d'une tour hybride (12) pour une éolienne (10), comprenant :
la liaison d'une extrémité inférieure d'au moins une section de tour polygonale (24) à une fondation (28) de l'éolienne (10), dans lequel la au moins une section de tour polygonale (24) inclut un profil en coupe transversale polygonal ;
la liaison d'une extrémité inférieure d'au moins une section de tour tubulaire (26) à une extrémité supérieure de la au moins une section de tour polygonale (24), dans lequel la au moins une section de tour tubulaire (26) inclut un profil en coupe transversale circulaire ; et
la disposition d'une pièce de transition (40) entre la au moins une section de tour polygonale (24) et la au moins une section de tour tubulaire (26), dans lequel la pièce de transition (40) inclut une partie supérieure présentant un profil en coupe transversale circulaire configurée pour être reliée à l'extrémité inférieure (74) de la au moins une section de tour tubulaire (26), et une partie inférieure présentant un profil en coupe transversale polygonal configurée pour être reliée à l'extrémité supérieure de la au moins une section de tour polygonale (24),
dans lequel la partie inférieure de la pièce de transition (40) est reliée à l'extrémité supérieure de la au moins une section de tour polygonale par une pluralité d'éclisses (90).

11. Procédé d'assemblage de la tour hybride (12) selon la revendication 10, dans lequel la disposition de la pièce de transition (40) entre la au moins une section de tour polygonale (24) et la au moins une section de tour tubulaire (26) comprend l'intégration de la pièce de transition (40) dans l'extrémité inférieure de la au moins une section de tour tubulaire (26) de telle sorte que la pièce de transition (40) et la au moins une section de tour tubulaire (26) forme une structure unitaire (76), et dans lequel l'intégration se déroule avant de relier la au moins une section de tour tubulaire (26) à la au moins une section de tour polygonale (24).

12. Procédé d'assemblage de la tour hybride (12) selon la revendication 11, comprenant en outre le levage de la au moins une section de tour tubulaire (26) avant de relier la au moins une section de tour tubulaire (26) à la au moins une section de tour polygonale (24), et dans lequel la pièce de transition (40) est intégrée dans l'extrémité inférieure de la au moins une section de tour tubulaire (26) avant le levage de la au moins une section de tour tubulaire (26).

13. Procédé d'assemblage de la tour hybride (12) selon l'une quelconque des revendications 10-12, comprenant en outre le transport de la au moins une section de tour tubulaire (26) d'une usine de fabrication vers un site d'installation d'éolienne, et dans lequel la pièce de transition (40) est intégrée dans l'extrémité inférieure de la au moins une section de tour tubulaire (26) avant le transport de la au moins une section de tour tubulaire (26).

14. Procédé d'assemblage de la tour hybride (12) selon la revendication 10, dans lequel la disposition de la pièce de transition (40) entre la au moins une section de tour polygonale (24) et la au moins une section de tour tubulaire (26) comprend la liaison de la pièce de transition (40) à l'extrémité inférieure de la au moins une section de tour tubulaire (26) avant de relier la au moins une section de tour tubulaire (26) à la au moins une section de tour polygonale (24).

15. Procédé d'assemblage de la tour hybride (12) selon la revendication 14, comprenant en outre le levage de la au moins une section de tour tubulaire (26) avant de relier la au moins une section de tour tubulaire (26) à la au moins une section de tour polygonale (24), et dans lequel la pièce de transition (40) est reliée à l'extrémité inférieure de la au moins une section de tour tubulaire (26) avant de lever la au moins une section de tour tubulaire (26).

16. Procédé d'assemblage de la tour hybride (12) selon l'une quelconque des revendications 10-15, dans lequel la au moins une section de tour polygonale (24) est formée par une pluralité de segments de tour (80), dans lequel chacun de la pluralité de segments de tour (80) présente une ou plusieurs courbures formées à l'intérieur de celui-ci, et dans lequel le procédé comprend en outre la liaison de la pluralité de segments de tour (80) de bord à bord pour former la au moins une section de tour polygonale (24).
